Europäisches Patentamt

European Patent Office

Office européen des brevets

(11) Publication number: **0 259 218 B1**

# EUROPEAN PATENT SPECIFICATION

(45) Date of publication of patent specification: **10.06.92** (51) Int. Cl.⁵: **H04M 9/08**

(21) Application number: **87401921.9**

(22) Date of filing: **21.08.87**

(54) **Circuit arrangement for providing isolation between the transmission paths of a hands-free subset.**

(30) Priority: **30.08.86 DE 3629596**

(43) Date of publication of application:
**09.03.88 Bulletin 88/10**

(45) Publication of the grant of the patent:
**10.06.92 Bulletin 92/24**

(84) Designated Contracting States:
**AT BE CH DE ES FR GB GR IT LI LU NL SE**

(56) References cited:
**WO-A-84/03407**
**FR-A- 2 236 320**
**GB-A- 2 095 956**
**US-A- 3 902 023**
**US-A- 4 154 981**

**PATENT ABSTRACTS OF JAPAN, vol. 10, no. 236 (E-428)[2292], 15th August 1986; & JP-A-61 67 357**

**Electrical Communication, Band 53, Nr.4, 1978, pages 288-293; M. Slawik et al.**

(73) Proprietor: **Standard Elektrik Lorenz Aktien-gesellschaft**
**Lorenzstrasse 10**
**W-7000 Stuttgart 40(DE)**

(84) Designated Contracting States:
**DE**

(73) Proprietor: **ALCATEL N.V.**
**Strawinskylaan 537 (World Trade Center)**
**NL-1077 XX Amsterdam(NL)**

(84) Designated Contracting States:
**BE CH ES FR GB GR IT LI LU NL SE AT**

(72) Inventor: **Reschke, Thomas**
**Rossbergstrasse 39**
**W-7000 Stuttgart 1(DE)**

(74) Representative: **Gähr, Hans-Dieter, Dipl.-Ing. (FH) et al**
**Standard Elektrik Lorenz AG Patent- und Lizenzwesen Postfach 30 09 29**
**W-7000 Stuttgart 30(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a circuit arrangement as set forth in the preamble of claim 1.

A hands-free subset with such a circuit arrangement is described, for example, in an article by M.Slawik and H.Wiedmann published in "Elektrisches Nachrichtenwesen", Vol. 53, No. 4, 1978, pages 288 to 293.

In such a hands-free facility, background noise is particularly disturbing, because such noise, like the voice signals, may cause the send path to be de-attenuated, and the receive path to be attenuated. As a result, the send path is constantly de-attenuated, and the subscriber at the opposite station can no longer get through because the receive path is blocked. Use of the hands-free facility is thus rendered very difficult. In the above article, a circuit for reducing the effect of continuous interfering noise is given on page 291, right column, penultimate paragraph, but this circuit is effective only in the presence of persistent, continuous noise, not in the presence of short-time noise with a high dynamic range.

Furthermore, an electronic signal-processing arrangement with a voice-controlled noise suppressor is known (FR-A-2 236 320). The noise suppressor is controlled by a comparator which compares the amplitudes of two signals derived from an input signal by means of bandpass filters and having different speech-to-noise ratios.

It is the object of the present invention to provide a circuit arrangement of the above kind which also reduces the effect of short-time background noise on hands-free telephone operation.

This object is attained by the features set forth in the characterizing part of claim 1.

The invention makes use of the fact that nearly every background noise occurring in an enclosed space contains a frequency component lying below the lower limit of the voice-frequency range, while this is not true for voice signals; this was found by a great number of measurements. The circuit arrangement in accordance with the invention interprets a low-frequency-containing signal picked up by a microphone as noise, and inhibits or reduces the de-attenuation of the send path and the attenuation of the receive path by the voice control circuit. Thus, background noise, such as the noise of running machines, ventilating fans, cooling installations, but also traffic noise or short-time noise, such as the slamming of doors, lose their effect on the voice control. Noise produced in the immediate vicinity of the microphone mostly contains frequencies above the voice-frequency range. Such noise (e.g., paper rustling, typewriter), which may also be very disturbing, can be rendered ineffective in analogous fashion by deriving a noise criterion from the level of a frequency range lying above the voice-frequency range.

Further advantageous features of the circuit arrangement in accordance with the invention are claimed in the subclaims. Claims 2 to 4 describe different circuits for influencing the voice control by means of a previously derived noise criterion.Claim 5 specifies an advantageous frequency range for deriving a noise criterion. Claim 6 gives a circuit in which noise criteria are derived from frequency ranges lying above and below the voice-frequency range.

An embodiment of the circuit arrangement in accordance with the invention will now be described with reference to the accompanying drawing.

The single figure of the drawing is a block diagram of the embodiment.

The figure shows schematically the send path of a hands-free subset, comprising a voice control circuit 1 which acts on the send path via a line 15, and on the receive path via a line 16.

Voice signals from the subscriber and ambient noise are picked up by a microphone 2, which converts them into electric signals. The frequency response of the microphone is chosen so that sound signals lying below the voice-frequency range are not completely suppressed. From the output of the microphone, the converted voice signals are applied through a first preamplifier 3, a first band-pass filter 4, and a variable-gain amplifier 5 to the subscriber line 6. The band-pass filter 4 removes the signal components lying outside the voice-frequency range, and the variable-gain amplifier amplifies the signal from the band-pass filter 4 under control of signals from the voice control circuit 1, thus producing the send signal. The send-path levels for the voice control circuit are tapped at the output of the first preamplifier 3 and at the output of the variable-gain amplifier 5. The two tap signals are summed in a first adder 7 and applied to a second band-pass filter 8 which limits the sum signal to the voice-frequency range or to a frequency band lying within the voice-frequency range. The output of the second band-pass filter is amplified in a first control-signal amplifier 9 and rectified in a following first rectifier stage 10. Before being applied as a control signal to the voice control unit, the rectified signal is combined in a second adder 11 with a second control signal which represents the noise level in the send path and is opposite in polarity to the first control signal. The noise-level signal is tapped from the send path directly at the output of the microphone and is fed to a low-pass filter 12 which rejects frequencies above 90 Hz. The output of the low-pass filter, like the first control signal derived via the band-pass filter 8, is amplified in a second control-signal amplifier 13 and rectified in a second rectifier stage 14. The diodes of this rectifier stage are so connected that the control signal appears as a negative potential at the ouput of this stage and, thus, at the input of the second adder 11. The latter delivers a sum signal in which the influence of low-frequency noise signal components in the send path is eliminated or at least greatly reduced. This sum signal and a control signal derived in the receive path (not shown) of the hands-free facility and applied over a line 17 are used to control the voice control circuit 1.

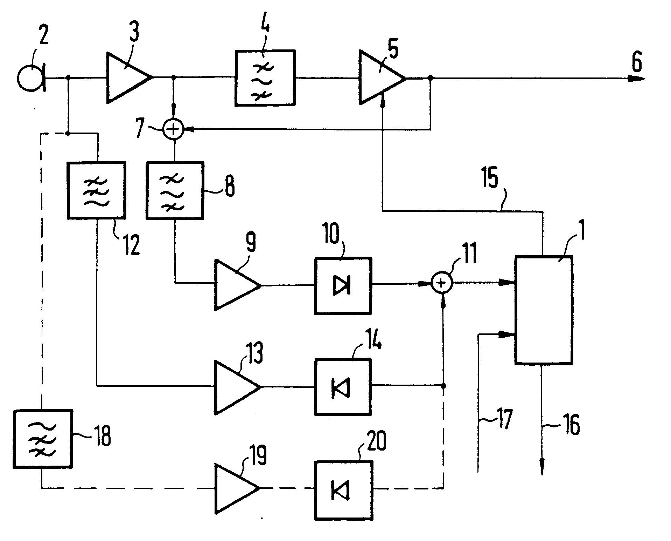

In Fig. 1, an additional circuit is indicated by broken lines. It contains a high-pass filter 18, an additional control-signal amplifier 19, and an additional rectifier stage 20. This circuit derives a noise-level signal from the frequency range located above the voice-frequency range and is connected in parallel with the circuit consisting of the low-pass filter 12, the control-signal amplifier 13, and the rectifier stage 14. It counteracts the control by the voice level, too, and serves to reduce the effect of interfering noise produced near the microphone and containing high frequencies on the voice control.

## Claims

1. Circuit arrangement for providing isolation between the two transmission paths of a hands-free subset, comprising a voice control circuit which, depending on the voice levels determined in the transmission paths, de-attenuates the transmission path having the higher voice level and attenuates the other transmission path via variable-gain amplifiers contained in the transmission paths,
   **characterized in** that at least one additional circuit (11, 12, 13, 14) is provided which selectively senses the level of the send path of the two transmission paths in a predetermined frequency range lying outside the voice-frequency range and, depending on this level, produces a control signal for the voice control circuit (1) which, counteracting the control by the voice level, prevents or reduces the de-attenuation of the send path.

2. A circuit arrangement as claimed in claim 1, characterized in that the additional circuit includes a filter (12), a rectifier stage (14), and an adder (11), that the filter circuit is connected to the input of the send path, that the rectifier stage rectifies the amplified output of the filter and delivers its output in inverted form to the added, and that the adder combines the rectified and inverted output of the filter with a voice-level signal derived via a band-pass filter (8) and rectified by an additional rectifier stage, and delivers the sum signal to the voice control circuit.

3. A circuit arrangement as claimed in claim 1, characterized in that the additional circuit includes a filter (12) and a rectifier stage (14), with the filter connected to the input of the send path, and the rectifier stage rectifying the output of the filter, and that a storage element and a gate circuit preceding said storage element are provided, the storage element serving to store a voice control signal derived from the voice level of the send path via a band-pass filter and applied to the gate circuit, and the gate circuit being controlled by the rectified output of the filter in such a way that the transfer of the voice control signal to the storage element is inhibited when the rectified output of the filter exceeds a predetermined value.

4. A circuit arrangement as claimed in claim 1, characterized in that the additional circuit includes a filter and a rectifier stage following said filter, with the filter connected to the input of the send path, that a variable-gain amplifier is provided which amplifies a voice control signal derived from the send path via a band-pass filter and feeds it to the voice control circuit, and whose gain is reduced by the output of the rectifier stage.

5. A circuit arrangement as claimed in any one of the preceding claims, characterized in that the predetermined frequency range lies below the voice-frequency range and covers frequencies up to 90 Hz, and that the filter is a low-pass filter (12).

6. A circuit arrangement as claimed in any one of claims 1 to 4, characterized in that two additional circuits (11, 12, 13, 14; 18, 19, 20) are provided one of which includes a low-pass filter (12) and produces a control signal dependent on the level of a frequency range lying below the voice-frequency range, while the other includes a high-pass filter (18) and produces a control signal dependent on the level of a control signal lying above the voice-frequency range.

## Revendications

1. Montage de circuit pour réaliser une isolation entre les deux voies de transmission d'un poste à mains libres, comportant un circuit de commande vocale qui, en fonction des niveaux vocaux déterminés sur les voies de transmission, désatténue la voie de transmission qui présente le niveau vocal le plus élevé et atténue l'autre voie de transmission par l'intermédiaire d'amplificateurs à gain variable contenus sur les voies de transmission.

montage caractérisé par le fait qu'il est prévu au moins un circuit supplémentaire (11, 12, 13, 14) qui détecte sélectivement le niveau de la voie d'émission, parmi les deux voies de transmission, sur une plage de fréquence prédéterminée située à l'extérieur de la plage de fréquence vocale et, en fonction de ce niveau, produit pour le circuit (1) de commande vocale, un signal de commande qui, en contrariant la commande par le niveau vocal, empêche ou réduit la désatténuation de la voie d'émission.

2.  Montage de circuit comme revendiqué dans la revendication 1, caractérisé par le fait que les circuits supplémentaires comportent un filtre (12), un étage redresseur (14), et un additionneur (11), par le fait que le circuit de filtrage est relié à l'entrée de la voie d'émission, par le fait que l'étage redresseur redresse le signal de sortie, amplifié, du filtre et envoie à l'additionneur son signal de sortie, en le changeant de signe, et par le fait que l'additionneur combine le signal de sortie du filtre, redressé et changé de signe, avec un signal de niveau vocal déduit par l'intermédiaire d'un filtre passe-bande (8) et redressé par un étage redresseur supplémentaire, et envoie le signal d'addition au circuit de commande vocale.

3.  Montage de circuit comme revendiqué dans la revendication 1, caractérisé par le fait que le circuit supplémentaire comporte un filtre (12) et un étage redresseur (14), le filtre étant relié à l'entrée de la voie d'émission, et l'étage redresseur redressant le signal de sortie du filtre, et par le fait que sont prévus un élément de mémorisation et un circuit de porte précédent ledit élément de mémorisation, l'élément de mémorisation servant à mémoriser un signal de commande vocale déduit du niveau vocal de la voie d'émission, par l'intermédiaire d'un filtre passe-bande, et envoyé au circuit de porte, et le circuit de porte étant commandé par le signal de sortie, redressé, du filtre de façon telle que le transfert du signal de commande vocale à l'élément de mémorisation est interdit lorsque le signal de sortie, redressé, du filtre excède une valeur prédéterminée.

4.  Montage de circuit comme revendiqué dans la revendication 1, caractérisé par le fait que le circuit supplémentaire comporte un filtre et un étage redresseur qui vient à la suite dudit filtre, le filtre étant relié à l'entrée de la voie d'émission, par le fait qu'il est prévu un amplificateur à gain variable qui amplifie un signal de commande vocale déduit de la voie d'émission par l'intermédiaire d'un filtre passe-bande et l'envoie au circuit de commande vocale, amplificateur dont le gain est réduit par le signal de sortie de l'étage redresseur.

5.  Montage de circuit comme revendiqué dans l'une quelconque des revendications précédentes, caractérisé par le fait que la plage de fréquence prédéterminée se situe en-dessous de la plage de fréquence vocale et couvre des fréquences allant jusqu'à 90 Hz, et par le fait que le filtre est un filtre passe-bas (12).

6.  Montage de circuit comme revendiqué dans l'une quelconque des revendications 1 à 4, caractérisé par le fait que sont prévus deux circuits supplémentaires (11, 12, 13, 14; 18, 19, 20) dont l'un comporte un filtre passe-bas (12) et produit un signal de commande dépendant du niveau d'une plage de fréquence située en-dessous de la plage de fréquence vocale, tandis que l'autre comporte un filtre passe-haut (18) et produit un signal de commande dépendant du niveau d'un signal de commande situé au-dessus de la plage de fréquence vocale.

**Patentansprüche**

1.  Schaltungsanordnung zur Entkopplung der beiden Übertragungszweige eine Freisprecheinrichtung mit einer Sprachsteuerschaltung, die über in den Übertragungszweigen befindliche regelbare Verstärker, abhängig von den in den Übertragungszweigen festgestellten Sprachpegeln, denjenigen Übertragungszweig, der den höheren Sprachpegel aufweist, entdämpft und den anderen Übertragungszweig dämpft, **dadurch gekennzeichnet,** daß mindestens ein Zusatzstromkreis (11, 12, 13, 14) vorgesehen ist, der den Pegel des zum Senden benutzten Übertragungszweiges (Sendezweig) in einem vorgegebenen, außerhalb des Sprachfrequenzbereiches liegenden Frequenzbereich selektiv erfaßt und abhängig von diesem Pegel ein Steuersignal für die Sprachsteuershaltung (1) erzeugt, welches, der Steuerung durch den Sprachpegel entgegengerichtet, die Entdämpfung des Sendezweiges verhindert oder mindert.

2.  Schaltungsanordnung nach Anspruch 1, dadurch gekennzeichnet daß der Zusatzstromkreis eine Filterschaltung (12), eine Gleichrichterstufe (19) und eine Addierschaltung (11) aufweist, daß die Filterschaltung mit dem Eingang des Sendezweiges verbunden ist, daß die Gleichrichterschaltung das vestärkte Ausgangssignal der Filterschaltung gleichrichtet und in invertierter Form auf die Addierschaltung ausgibt und daß die Addierschaltung das invertierte gleichgerichtete Ausgangssignal der Filterschaltung mit einem über ein Bandpaßfilter (8) gewonnenen, gleichgerichteten Sprachpegelsignal verknüpft und das Summensignal an die Sprachsteuerschaltung ausgibt.

3. Schaltungsanordnung nach Anspruch 1, dadurch gekennzeichnet, daß der Zusatzstromkreis eine Filterschaltung (12) und eine Gleichrichterstufe (14) aufweist, wobei die Filterschaltung mit dem Eingang des Sendezweiges verbunden ist und die Gleichrichterstufe das Ausgangssignal der Filterschaltung gleichrichtet und daß weiterhin ein Speicherglied und eine diesem vorgeschaltete Torschaltung vorgesehen sind, wobei das Speicherglied der Speicherung eines aus dem Sprachpegel des Sendezweiges über ein Bandpaßfilter gewonnenen, über die Torschaltung zugeführten Sprachsteuersignals dient und die Torschaltung vom gleichgerichteten Ausgangssignal der Filterschaltung so angesteuert wird, daß die Durchschaltung des Sprachsteuersignals zum Speicherglied unterbunden wird, wenn das gleichgerichtete Ausgangssignal der Filterschaltung einen vorgegebenen Wert übersteigt.

4. Schaltungsanordnung nach Anspruch 1, dadurch gekennzeichnet, daß der Zusatzstromkreis eine Filterschaltung und eine nachgeschaltete Gleichrichterstufe aufweist, wobei die Filterschaltung mit dem Eingang des Sendezweiges verbunden ist, daß weiterhin ein Regelverstärker vorgesehen ist, der ein vom Sendezweig über ein Bandpaßfilter gewonnenes Sprachsteuersignal verstärkt und der Sprachsteuerschaltung zuführt, und der durch das Ausgangssignal der Gleichrichterstufe zurückgeregelt wird.

5. Schaltungsanordnung nach einem der vorstehenden Ansprüche, dadurch gekennzeichnet, daß der unterhalb des Sprachfrequenzbereichs liegende vorgegebene Frequenzbereich Frequenzen bis 90 Hz umfaßt und die Filterschaltung ein Tiefpaßfilter (12) ist.

6. Schaltungsanordnung nach einem der Ansprüche 1 bis 4, dadurch gekennzeichnet, daß zwei Zusatzstromkreise (11, 12, 13, 14; 18, 19, 20) vorgesehen sind, von denen einer ein Tiefpaßfilter (12) enthält und ein vom Pegel eines unterhalb des Sprachfrequenzbereichs liegenden Frequenzbereichs abhängiges Steuersignal erzeugt, der andere ein Hochpaßfilter (18) enthält und ein vom Pegel eines oberhalb des Sprachfrequenzbereichs liegenden Frequenzbereichs abhängiges Steuersignal erzeugt.